(19) Europäisches Patentamt
European Patent Office
Office européen des brevets

(11) **EP 3 643 105 B1**

(12) **EUROPEAN PATENT SPECIFICATION**

(45) Date of publication and mention
of the grant of the patent:
**15.11.2023 Bulletin 2023/46**

(21) Application number: **17734022.1**

(22) Date of filing: **21.06.2017**

(51) International Patent Classification (IPC):
*H04W 24/02* $^{(2009.01)}$   *H04L 41/0823* $^{(2022.01)}$
*H04L 41/022* $^{(2022.01)}$   *H04L 41/0866* $^{(2022.01)}$

(52) Cooperative Patent Classification (CPC):
**H04W 24/02; H04L 41/022; H04L 41/08;
H04L 41/0823; H04L 41/0866**

(86) International application number:
**PCT/EP2017/065160**

(87) International publication number:
**WO 2018/233818 (27.12.2018 Gazette 2018/52)**

(54) **COORDINATED NETWORK OPTIMIZATION BY COGNITIVE NETWORK MANAGEMENT**

KOORDINIERTE NETZWERKOPTIMIERUNG DURCH KOGNITIVE NETZWERKVERWALTUNG

OPTIMISATION DE RÉSEAU COORDONNÉE PAR GESTION DE RÉSEAU COGNITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2020 Bulletin 2020/18**

(73) Proprietor: **Nokia Solutions and Networks Oy
02610 Espoo (FI)**

(72) Inventors:
• **MWANJE, Stephen
84405 Dorfen (DE)**
• **SANNECK, Henning
81549 Munich (DE)**
• **SCHMELZ, Lars Christoph
85540 Haar (DE)**

(74) Representative: **TBK
Bavariaring 4-6
80336 München (DE)**

(56) References cited:
**WO-A1-2016/150468      US-A1- 2016 087 842
US-A1- 2017 063 621**

• **TSVETKOV TSVETKO ET AL: "Verification of
Configuration Management Changes in
Self-Organizing Networks", IEEE
TRANSACTIONS ON NETWORK AND SERVICE
MANAGEMENT, IEEE, US, vol. 13, no. 4, 1
December 2016 (2016-12-01), pages 885-898,
XP011636373, ISSN: 1932-4537, DOI:
10.1109/TNSM.2016.2589459 [retrieved on
2016-12-08]**

**Description**

<u>Field</u>

The present invention relates to coordinated network optimization by cognitive network management. More specifically, the present invention exemplarily relates to measures (including methods, apparatuses and computer program products) for realizing coordinated network optimization by cognitive network management.

<u>Background</u>

The present specification generally relates to cognitive network management (CNM) and specifically, to the operation of cognitive functions (CF) in 3rd Generation Partnership Project (3GPP) 5G (radio access) networks and other (future) generations of wireless/mobile networks. Despite the success of self-organizing networks (SON), fundamental shortcomings in terms of flexibility and adaptability to dynamic and complex environments remain outstanding. CNM is expected to overcome these shortcomings by ensuring that CFs can learn about the environment they are operating in, can learn their optimal behavior fitting to the specific environment, can learn from their experiences and that of other instances of the same or different operations, administration and management (OAM) functions, and can learn to achieve the higher-level goals and objectives as defined by the respective mobile network operator (MNO).

The main aim of CNM is to reduce the complexity of managing 5G networks through use of the more intelligent CFs. With such intelligence, however, a new challenge arises, specifically as regards their coordinated operation.

Namely, typically, a separate SON function is needed for each network management (NM) problem, since it is practically impossible to implement a single function that deals with all problems or objectives, owing to their differences along the whole lifecycle. In particular, differences may exist in the design and development of the functions (by the manufacturer alone or in cooperation with operators), since, for example, different teams (with different networking/NM specialties) develop different types of functions leveraging the specific available human knowledge. Further differences may exist in the deployment and operation of the functions (by the operators), since, for example, functions differ in when, where, how often, for which data and on which parameters they need to be executed.

Accordingly, the individual functions need to thereafter be coordinated to ensure that global objectives are met even as each function meets its individual objectives.

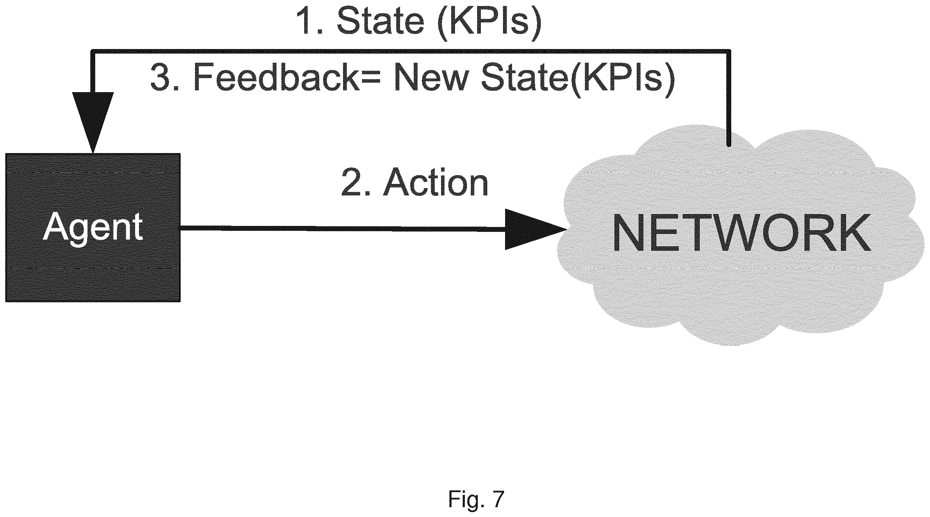

A first step towards automating the OAM of mobile (radio) networks was the introduction of SON, which allows an autonomic optimization of certain network configuration parameters based on measurements from individual network elements. Therein, each NM responsibility/function was addressed by a single SON function represented the agent block in Figure 7. Here, Figure 7 shows a schematic diagram of an example of an SON function environment with signaling variants and in particular illustrates the behavior of such SON function, in which a state machine matches inputs (e.g. key performance indicators (KPI) to network configurations.

The function illustrated with the agent block in Figure 7 is a closed-loop control algorithm that acquires data from the network and uses the measurements to determine or compute new configuration values for the network (element) (herein termed as "network configurations") according to a set of algorithm internal rules or policies. The input data is typically a set of key performance indicators (KPI), which are higher-level metrics derived from software counters that track events occurring in the hardware or the physical/radio environment and that are exposed over some software interface towards the element or network management systems.

In other words, the function is a state machine that matches inputs (network KPIs) to outputs (network configurations). It has a fixed behavior in that its input-output relationship or the path thereto is predesigned through the rules (states and state transitions) of the algorithm.

To enable a joint operation and configuration of a multitude of individually acting SON function instances, concepts for SON function co-design, SON coordination and SON management have been introduced. However, a central problem of SON remains. Namely, while SON management allows a modification of some parameters of a SON function such that the behavior of the SON algorithm can be slightly modified (and thereby its effects on the network configuration), the SON algorithm as such (including the algorithm inherent rules, state machine and state transitions) remains unchanged.

More sophisticated adaptations of the SON algorithms therefore need to be done manually by the SON manufacturer. This can be improved through an effective software development and information technology operations (DevOps) process i.e. a quick turnaround from research and development (R&D) to operations and back to R&D. It is assumed that, however, such a tedious back and forth cycle (even with a very effective DevOps process) may be avoided with in-situ adaptation of rules using CFs.

A goal of CNM is to improve this flexibility and adaptability such that even state machines within the algorithms can be modified automatically through learning and decision making algorithms. However, a constraint of joint operation and configuration of multiple functions (or their instances), which has been prominent in SON already, is even more challenging in CNM. Namely, for the individually learning CFs, the learning behavior creates a nondeterministic environment. This then makes SON style coordination and management less applicable since such management rules were designed assuming basically deterministic behavior for the SON functions.

In particular, for CFs, the learning functions may distort the operating environment of each other CF. This is especially critical in multi-vendor (MV) environments, where the MV boundary could be between two cells from two vendors but with overlapping coverage (e.g. in a multi-cell-layer network where effects of configurations changes are mutually visible) or between two CFs in the same cell with the CFs manufactured by separate vendors. Thereby, a rule based coordinator can be conceived to control and coordinate the CF operations (executed actions) but it is virtually impossible for it to manage the learning in a way that accounts for the different CFs' learning characteristics (i.e. frequency of learning, strategy of searching its parameter space, range of parameter values, etc.).

Coordination and management of multiple SON functions (respectively SON coordination and SON management) is performed in a hierarchical manner. Both are performed by (non-cognitive) centralized functions according to rather fixed rules, or through policies that are created based on fixed rules and on input from MNO and SON manufacturer. Some known simple adaptation components aiming at an adaptation of SON function configurations do not provide a real learning process.

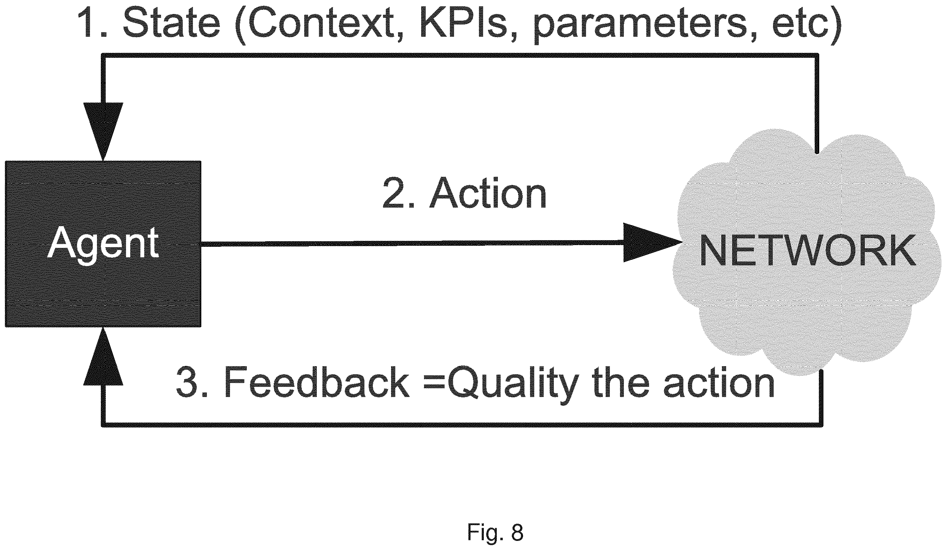

To improve flexibility and adaptability, several learning based SON functions have been proposed, which are a precursor to the advancement of SON towards CNM, which may henceforth be the industry's direction. CNM is expected to improve flexibility and adaptability such that even state machines within the algorithms can be modified automatically through learning and decision making algorithms like the CF illustrated in Figure 8.

Figure 8 shows a schematic diagram of an example of a CF environment with signaling variants and in particular illustrates the behavior of such cognitive function, in which, for each state, the agent learns how best to act using feedback that quantifies the quality/appropriateness of the respective actions.

With a radio network as the CF's environment, a CF defines states for which actions must be learned. More than just KPIs as considered in SON, the states capture all the observations that may trigger the execution of the CF. These may, amongst others, include the environment context like geography, user speed, etc. as well as the prevailing values of the configuration parameters.

Actions are then the different possible parameter values that can be applied in such states. To learn from its actions, the CF needs to quantify the quality of the actions, which may be achieved using the received feedback from the network. Using such a function, the CF's learning agent learns the best actions over multiple interactions with the network.

As CFs began to appear, solutions for their coordination and management have also sporadically been proposed.

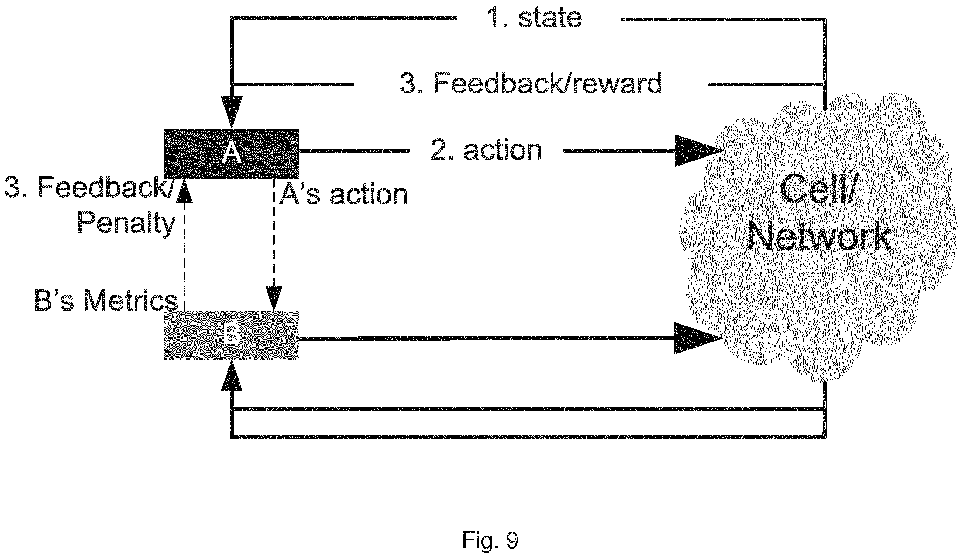

Figure 9 shows a schematic diagram of an example of a CF environment with signaling variants and in particular illustrates a distributed coordination of cognitive functions particularly from two different vendors.

In the following, it is assumed that CFs A and B shown in Figure 9 are from two different vendors, regardless of whether they solve the same or different problems.

In this regard, it is noted that it is considered unlikely that there will ever be a multivendor coordinator that is more than a simple activate/deactivate/block mechanism. This is because, such a coordinator would need to understand all KPIs as designed by the different vendors which requires too much synchronization among the vendors to match all KPIs, thus causing complexity. Such required synchronization has been tried in special industry fora like Operations Support Systems interoperability initiative (OSSII) and in the course of 3GPP standardization but with limited success due to that complexity.

Here, OSSII seeks to open-up existing definitions to allow a vendor A to hard code another vendors' definitions (or A's interpretation of those definitions) into vendor A's own systems. The challenge is that these fora include only a subset of vendors which makes the solutions unable to scale. Moreover, the approach requires a lot of synchronization among the vendors which is very time consuming since the vendors need to open their KPI definitions, and since for each pair of vendors, semantics need to be matched for each respective KPI pair (which can also be considered as a "full mesh" approach).

An alternative pro-active approach is the traditional option of synchronization through e.g. 3GPP standardization. This, although efficient in the operational phase, is even more tedious in the design/development phase, since different vendors' representatives need to agree (a priori to deployment and operational experience) on defining some definitions which are both useful but do not reveal a vendor's own intellectual property contained in the algorithms.

A distributed coordination solution similar to what is outlined in Figure 9 leverages a given CF's learning capabilities to minimize its conflicts with other CFs or at least the effects thereof while learning for its individual objectives.

Therein, if a CF A takes a configuration action comprising a change of at least one network related configuration parameter (such as for example a change of a value of the at least one network related configuration parameter) that affects (or may affect) other CFs e.g. CF B, CF A informs CF B of such an action. Then after an appropriate interval (specific to either CF A or CF B as may be needed), CF B and the other CFs report their metrics to CF A, which CF A aggregates with its own metrics to evaluate the global effect. In doing so, CF A can learn or determine the best action(s) that concurrently achieve(s) its (CF A's) objective(s) and minimizes or eliminates the effects of the action on the peers (affected CFs). The CF A can then execute the best action, such as for example: reversing the original configuration action of the change of at least one network related configuration parameter; or adjusting the original configuration action (such as for example adjusting the value of at the least one network related configuration parameter). As an example for such an approach, a cell is assumed, for which, among others, a mobility optimization CF and a load balancing CF are deployed. Instead of expanding the cell overlap in order to maximize the probability of a successful handover, the mobility optimization CF may learn to reduce the cell's overlap with a neighbor cell to ensure that the assumed cell does not pick up more load (thus affecting the load balancing CF) as a result of the increased overlap. In such a scenario, the assumed cell would then always avoid expanding its overlap even though that would otherwise guarantee a higher handover success probability. That distributed coordination solution may work well within a single vendor's network, but not as well in a MV scenario, since a vendor's definitions of the metrics are not known to the other vendors.

Main challenges with these existing coordination approaches can be described by the table below, comparing usefulness of different information availed to CFs in an MV environment.

| System / Solution type | Name/key e.g. HO rate | Defini-tion ($H = \frac{\#HOs}{Users}$) | Value (e.g. 4%) | Value interpretation (bad, low, high, etc.) | Implication (How usable is the available information) |
|---|---|---|---|---|---|
| OSII | Known per vendor | Known | Available | Unknown | "A" |
| Distributed Coordination | Known per vendor | Unknown | Available | Unknown | "B" |
| Standardization | Uniquely specified | May be specified | May be specified | implicit | "C" |
| "A": Interpretation can be manually developed and computed for and by each vendor. "B": Interpretation cannot be accounted for otherwise it requires synchronization among vendors. "C": KPI values are usable albeit prone to erratic interpretation. | | | | | |

In the current deployments, if not standardized, the KPI name for each vendor, e.g. the Handover (HO) rate H, is known or deducible but the different names need to be matched to a single key. Moreover, although the key is deducible, its definition is not deducible and is intended to remain company secret for each vendor. For example, H could be Handovers per user per unit time or Handovers per cell per unit time. So even if the KPI value is known e.g. as exchanged in the above-mentioned distributed coordination solution or as collected in OAM databases, other vendors' CFs cannot deduce any quantifiable meaning from that value. Standardization ensures to specify a unique name/key for a KPI and in some cases also the definitions and probably the value range.

Yet, since interpretations are not standardized, each vendor interprets and uses the standard differently. So, other vendors must then also figure out what the meaning of a given value from another vendor.

Hence, the problem arises that no way is known to exchange information on effects of CF's actions on other CFs and/or the network in particular in multivendor scenarios without complex standardization efforts and/or without exposing companies secrets in relation to e.g. a vendor's own intellectual property contained in algorithms. Thus, a required multi-vendor coordination of cognitive network management functions is not possible or possible only to a little extent.

Hence, there is a need to provide for coordinated network optimization by cognitive network management.

*Further prior art which relates to this field can be found in document* US 2017/063621 A1*, disclosing verification in self-organizing networks. According to this document, a network is operated by a self-organizing networks verification function, which monitors a network behavior and verifies a change in network based on the monitored network behavior. The self-organizing networks verification function performs a post-action verification of configuration management changes and may request from a self-organizing networks coordinator to undo configuration management changes.*

*Further prior art can be found in document* 'TSVETKOV TSVETKO ET AL, "Verification of Configuration Management Changes in Self-Organizing Networks", IEEE TRANSACTIONS ON NETWORK AND SERVICE MANAGEMENT, IEEE, US, vol. 13, no. 4, doi:10.1109/TNSM.2016.2589459, ISSN 1932-4537, (20161201), pages 885 - 898, (20161208), XP011636373 [A] 1-32 * page 890 *'.

*Further prior art can be found in document* US 2016/087842 A1*, disclosing a method of operating a communication network comprising a verification component comprising achieving at the verification component a verification*

*plan defining a verification process associated with a specific network operation and executing the verification plan after deploying the specific network operation. Further prior art can be found in document WO 2016/150468 A1, disclosing building and applying operational experiences for configuration management operations.*

Summary

Various exemplary embodiments of the present invention aim at addressing at least part of the above issues and/or problems and drawbacks.

*The above mentioned objects are achieved by what is defined in the appended independent claims. Advantageous modifications thereof are set forth in the appended dependent claims.*

That is, aspects of the present invention enable integration of multiple of the above mentioned cognitive functions also across vendor boundaries to thereby solve at least part of the problems and drawbacks identified in relation to the prior art. By way of the present invention, a new way of integrating the functions is defined, while also the corresponding interface(s) and messaging are described.

By way of exemplary embodiments of the present invention, there is provided coordinated network optimization by cognitive network management. More specifically, by way of exemplary embodiments of the present invention, there are provided measures and mechanisms for realizing coordinated network optimization by cognitive network management.

Thus, improvement is achieved by methods, apparatuses and computer program products enabling/realizing coordinated network optimization by cognitive network management.

Brief description of the drawings

In the following, the present invention will be described in greater detail by way of non-limiting examples with reference to the accompanying drawings, in which

Figure 1 is a block diagram illustrating an apparatus according to exemplary embodiments of the present invention,

Figure 2 is a block diagram illustrating an apparatus according to exemplary embodiments of the present invention,

Figure 3 is a block diagram illustrating an apparatus according to exemplary embodiments of the present invention,

Figure 4 is a block diagram illustrating an apparatus according to exemplary embodiments of the present invention,

Figure 5 is a schematic diagram of a procedure according to exemplary embodiments of the present invention,

Figure 6 is a schematic diagram of a procedure according to exemplary embodiments of the present invention,

Figure 7 shows a schematic diagram of an example of an SON function environment with signaling variants,

Figure 8 shows a schematic diagram of an example of a CF environment with signaling variants,

Figure 9 shows a schematic diagram of an example of a CF environment with signaling variants,

Figure 10 shows a schematic diagram of an example of a multi-vendor CNM coordination with signaling variants according to exemplary embodiments of the present invention,

Figure 11 shows a schematic diagram of processing and signaling sequences according to exemplary embodiments of the present invention,

Figure 12 shows a schematic diagram of processing and signaling sequences according to exemplary embodiments of the present invention,

Figure 13 shows a schematic diagram of processing and signaling sequences according to exemplary embodiments of the present invention, and

Figure 14 is a block diagram alternatively illustrating apparatuses according to exemplary embodiments of the present invention.

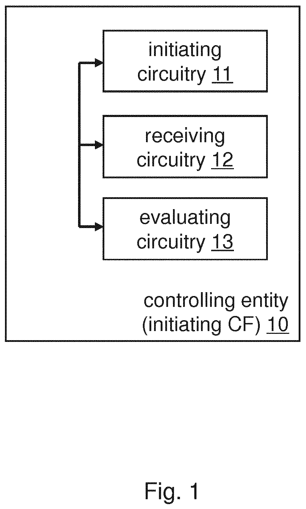

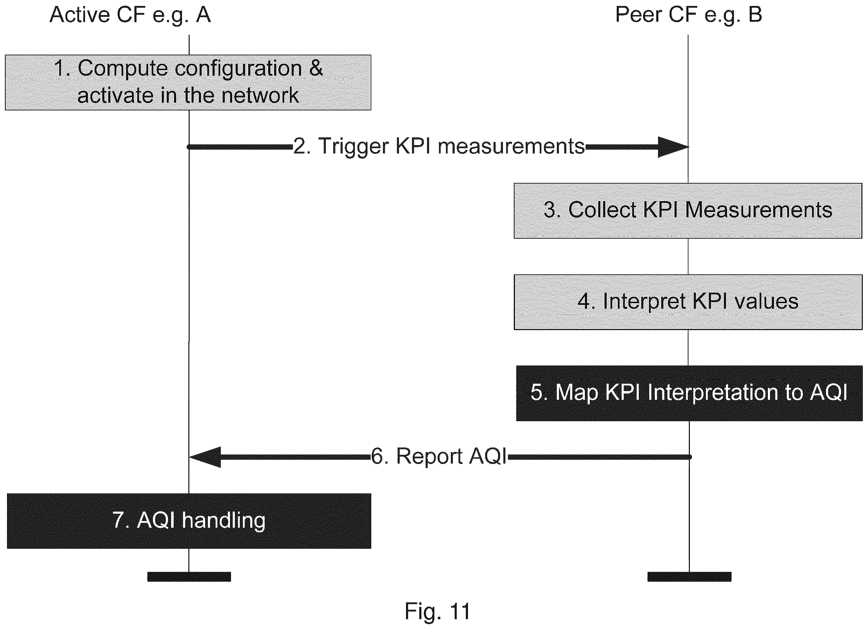

*Here, embodiments explained with reference to Figures 11 to 13 form part of the invention as claimed, while embodiments explained with reference to Figures 1 to 6, 10, and 14 represent examples useful for understanding the invention.*

Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied within the scope of the appended claims.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives.

According to exemplary embodiments of the present invention, in general terms, there are provided measures and mechanisms for (enabling/realizing) coordinated network optimization by cognitive network management.

Basically, as CNM takes root in the industry, corresponding integration solutions are needed to guarantee the coordinated operation and management of the CFs especially in a MV environment, as discussed above. According to exemplary embodiments of the present invention as explained in the following, the synchronization effort is decreased/minimized by availing the interpretation of the observed values even without availing the definitions. This allows each vendor's CFs to figure out their effects on other (vendors') CFs even without knowing any internals of those CFs.

As a distributed approach, according to exemplary embodiments of the present invention, a solution for CF coordination in the MV environment is provided that allows vendors to make sense of each other's measurements without requiring any complexity-causing inter-vendor agreement.

The distributed approach discussed beforehand required a single-vendor environment, since then the CFs can exchange metrics to determine the effect on one another. This is not applicable in a MV environment, where the KPI semantics (definitions, value ranges, interpretations, etc.) differ among the vendors. KPIs derived from counters that measure one physical or radio event (that is basically identical in two different vendors as per the technology), may be named and computed differently by the two vendors, as explained above in relation to the exemplary Handover rate. Moreover, even when the event is standardized, the counters derived from such an event may differ as is the case for radio link failures (RLF). The RLF is standardized, but its count (and subsequently rate) may either be incremented each time the event occurs regardless of whether it occurs after a reconnection or it may be incremented only the first time it occurs to a user but not if it occurs again after a reconnection. Consequently, the exchange of KPI or metric values will be useless since they need to be interpreted by the other CFs.

According to exemplary embodiments of the present invention, techniques for (distributed) coordination in a MV environment and the specifics of the exchanged data that enables that coordination are provided.

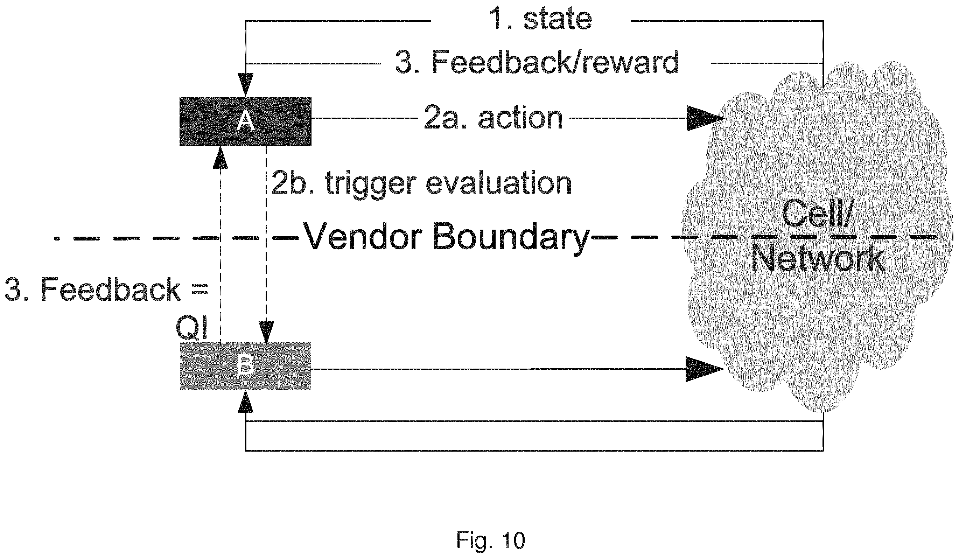

Figure 10 shows a schematic diagram of an example of a multi-vendor CNM coordination with signaling variants according to exemplary embodiments of the present invention.

For the scenario illustrated in Figure 10 it is assumed that the CFs A and B are from two different vendors, regardless of whether they solve the same or different problems.

In general, according to exemplary embodiments of the present invention, a CF action quality indicator (CFAQI, AQI) is provided as a generic measure that uses a pre-defined, fixed scale to quantify the effect of one CF on another.

For the CFAQI, if CF A (initiating CF) takes an action, its effects on the peers (affected CFs) will range from an extremely negative impact, e.g., like mobility load balancing (MLB) causing too many mobility related radio link failures (RLF); through mild effects that are insignificant (like MLB causing a few handover ping pongs) and to very positive effects like mobility robustness optimization (MRO) unexpectedly removing overload in a cell (by changing the cell mobility configuration thereby moving users to another cell). Consequently, according to exemplary embodiments of the present invention, a simple linear measure may be used to capture these effects.

According to exemplary embodiments of the present invention, a linear scale may be used for the quality indicator (action quality indicator) e.g. with values from -5 to +5 representing the different effects as shown in the two-part table below, where the second part is a continuation of the first part.

| Value | -5 | -4 | -3 | -2 | -1 | 0 | ... |
|---|---|---|---|---|---|---|---|
| **Meaning** | must never be used | should be avoided | Very Bad | Bad | Can live with it | Neutral effect | ... |

| Value | ... | 0 | +1 | +2 | +3 | +4 | +5 |
|---|---|---|---|---|---|---|---|
| **Meaning** | ... | Neutral effect | Acceptable | Good | Very Good | Excellent | As good as optimal |

Using such a scale allows each affected CF to internally compute the AQI as per the vendor's desired behavior of its entity (cell, beam or CF) and to only communicate that AQI across a defined inter-entity link (like the X2 in LTE or Xn in 5G). This allows the active/initiating CF (CF A in this case) to aggregate observed effects from multiple affected CFs (monitoring different entities like cells, beams, etc.) based on the same scale even though the observations are from different vendors and possibly different types of entities.

The general approach for the multi-vendor coordination according to exemplary embodiments of the present invention can be divided into seven steps as illustrated in Figure 11, parts whereof may be implemented in a vendor-specific manner, where these steps are distributed over the initiation CF and the affected CF(s).

Figure 11 shows a schematic diagram of processing and signaling sequences according to exemplary embodiments of the present invention and in particular illustrates an AQI based MV integration.

As a first step, according to exemplary embodiments of the present invention, the needed changes are computed, and these are activated in the network. This is undertaken by the initiating/active CF (CF A in the example in Figure 10), whose CF algorithm undertakes internal action to respond to the cell's/beam's optimization/configuration requirements.

As a second step, according to exemplary embodiments of the present invention, KPI measurements are triggered. In particular, the active CF triggers its peers (affected CFs) to measure their respective KPIs and report their observations. According to exemplary embodiments of the present invention, new message structures are provided to communicate such a trigger depending on the implementation.

As a third step, according to exemplary embodiments of the present invention, KPI measurements are collected. In particular, each peer CF (affected CF) collects KPIs as per its internal optimization objectives i.e. to ensure that its metrics are not negatively affected.

As a fourth step, according to exemplary embodiments of the present invention, the KPI(s) is/are interpreted. The peer CF (e.g. CF B in Figure 10) has to interpret the measured KPI value which may correspond to a process executed for internal optimization in CF B as well.

As a fifth step, according to exemplary embodiments of the present invention, KPI(s) is/are abstracted into the AOIs. The peer CF (e.g. CF B in Figure 10) abstracts the measured KPI(s) by mapping its interpretation of what has been observed onto the standardized AQI range for onward transmission.

As a sixth step, according to exemplary embodiments of the present invention, the thus ascertained AQI is transmitted to the initiating CF. In particular, the computed AQI is signaled by the peer CFs to the active CF for necessary action. According to exemplary embodiments of the present invention, an appropriate interface in combination/consideration of the designed AQI scale is provided. Respective implementation details are given below and are in addition open to future standardization.

Finally, as a seventh step, according to exemplary embodiments of the present invention, the received AQI(s) is/are handled by the initiating CF for consideration in the own learning process. In particular, according to exemplary embodiments of the present invention, on receiving the AQIs from the different peer CFs, the active CF validates the received AQIs to ensure that they do not skew its own learning, and aggregates the interpretation to determine the quality of the action leading to these AQIs. Respective implementation details are given below.

Exemplary embodiments of the present invention are defined in more general terms below.

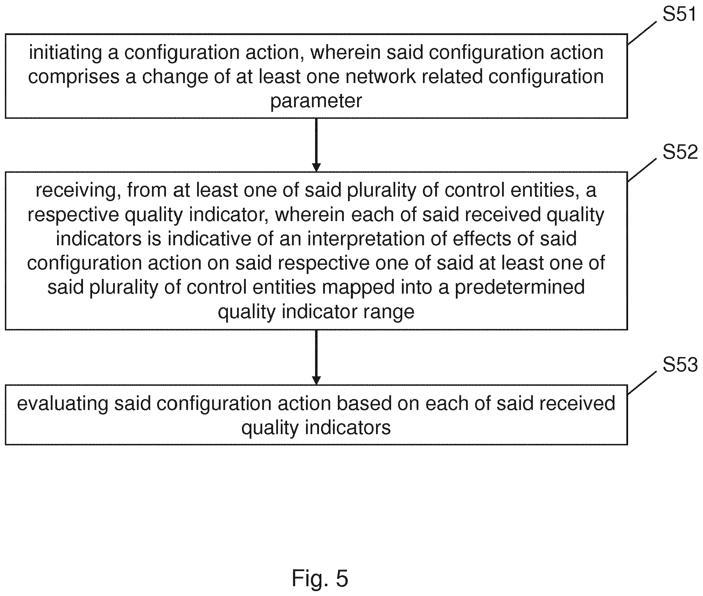

Figure 1 is a block diagram illustrating an apparatus according to exemplary embodiments of the present invention. The apparatus may be a control entity (initiating CF) 10 (which is configured to coordinate network optimization of a plurality of control entities in a network) comprising an initiating circuitry 11, a receiving circuitry 12, and an evaluating circuitry 13. The initiating circuitry 11 initiates a configuration action, wherein said configuration action comprises a change of at least one network related configuration parameter. The receiving circuitry 12 receives, from at least one of said plurality of control entities, a respective quality indicator, wherein each of said received quality indicators is indicative of an interpretation of effects of said configuration action on said respective one of said at least one of said plurality of control entities mapped into a predetermined quality indicator range. The evaluating circuitry 13 evaluates said configuration action based on each of said received quality indicators. Figure 5 is a schematic diagram of a procedure according to exemplary embodiments of the present invention. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to exemplary embodiments of the present invention comprises an operation of initiating (S51) a configuration action, wherein said configuration action comprises a change of at least one network related configuration parameter, an operation of receiving (S52), from at least one of said plurality of control entities, a respective quality indicator, wherein each of said received quality indicators is indicative of an interpretation of effects of said configuration action on said respective one of said at least one of said plurality of control entities mapped into a predetermined quality indicator range, and an operation of evaluating (S53) said configuration action based on each of said received quality indicators.

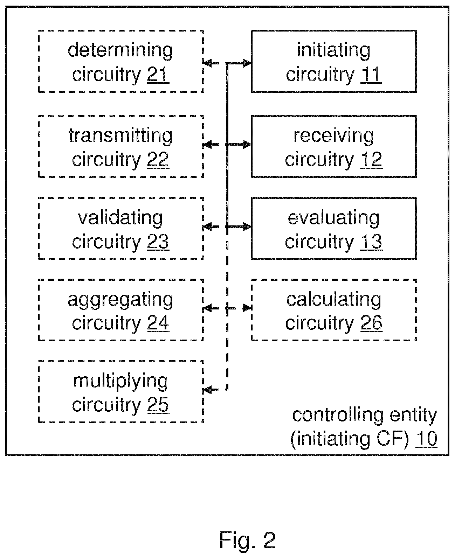

Figure 2 is a block diagram illustrating an apparatus according to exemplary embodiments of the present invention. In particular, Figure 2 illustrates a variation of the apparatus shown in Figure 1. The apparatus according to Figure 2 may thus further comprise determining circuitry 21, transmitting circuitry 22, validating circuitry 23, aggregating circuitry 24, multiplying circuitry 25, and/or calculating circuitry 26.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 5, exemplary additional operations are given, which are inherently independent from each other as such. According to such variation, an exemplary method according to exemplary embodiments of the present invention may comprise an operation of determining said configuration action based on a network requirement.

According to a variation of the procedure shown in Figure 5, exemplary additional operations are given, which are inherently independent from each other as such. According to such variation, an exemplary method according to exemplary embodiments of the present invention may comprise an operation of transmitting a first message including a trigger for monitoring effects of said configuration action on said respective one of said at least one of said plurality of control entities to said at least one of said plurality of control entities.

According to further exemplary embodiments of the present invention, the first message is indicative of a predetermined monitoring interval for said monitoring said effects of said configuration action.

According to a variation of the procedure shown in Figure 5, exemplary additional operations are given, which are inherently independent from each other as such. According to such variation, an exemplary method according to exemplary embodiments of the present invention may comprise an operation of transmitting, after expiration of a predetermined monitoring interval from transmitting said first message, to said at least one of said plurality of control entities, a second message including a request for transmission of said quality indicators.

According to a variation of the procedure shown in Figure 5, exemplary additional operations are given, which are inherently independent from each other as such. According to such variation, an exemplary method according to exemplary embodiments of the present invention may comprise an operation of validating each of said received quality indicators, and an operation of aggregating said validated quality indicators.

According to a variation of the procedure shown in Figure 5, exemplary details of the aggregating operation are given, which are inherently independent from each other as such.

Such exemplary aggregating operation according to exemplary embodiments of the present invention may comprise an operation of multiplying each of said validated quality indicators with a weight associated with said respective one of said at least one of said plurality of control entities, and an operation of calculating a sum of each of said weighted received quality indicators.

According to further exemplary embodiments of the present invention, the method is applied in a multi-vendor environment in which each of said plurality of control entities belongs to a respective vendor in said multi-vendor environment.

According to still further exemplary embodiments of the present invention, the predetermined quality indicator range is a predetermined linear scale.

According to still further exemplary embodiments of the present invention, the transmitting and/or receiving is effected via an X2 interface, an Xn interface, a cell internal cognitive network management information bus, or access through a centralized entity.

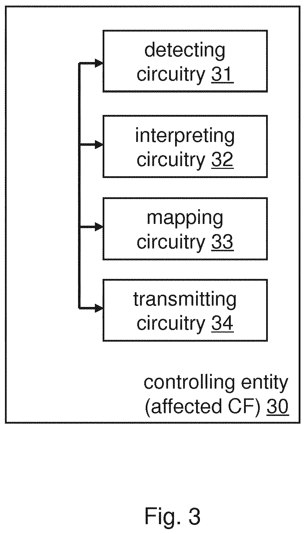

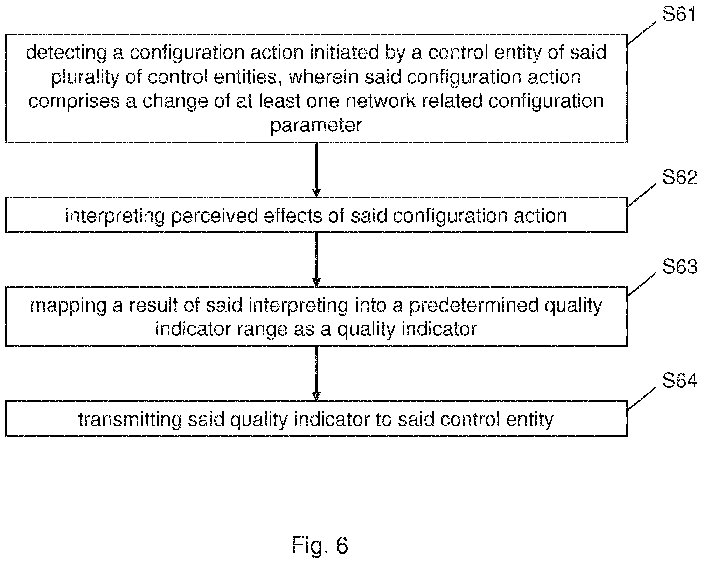

Figure 3 is a block diagram illustrating an apparatus according to exemplary embodiments of the present invention. The apparatus may be a control entity (affected CF) 30 (which is configured to coordinate network optimization of a plurality of control entities in a network) comprising a detecting circuitry 31, an interpreting circuitry 32, a mapping circuitry 33, and a transmitting circuitry 34. The detecting circuitry 31 detects a configuration action initiated by a control entity of said plurality of control entities, wherein said configuration action comprises a change of at least one network related configuration parameter. The interpreting circuitry 32 interprets perceived effects of said configuration action. The mapping circuitry 33 maps a result of said interpreting into a predetermined quality indicator range as a quality indicator. The transmitting circuitry 34 transmits said quality indicator to said control entity. Figure 6 is a schematic diagram of a procedure according to exemplary embodiments of the present invention. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to exemplary embodiments of the present invention comprises an operation of detecting (S61) a configuration action initiated by a control entity of said plurality of control entities, wherein said configuration action comprises a change of at least one network related configuration parameter, an operation of interpreting (S62) perceived effects of said configuration action, an operation of mapping (S63) a result of said interpreting into a predetermined quality indicator range as a quality indicator, and an operation of transmitting (S64) said quality indicator to said control entity.

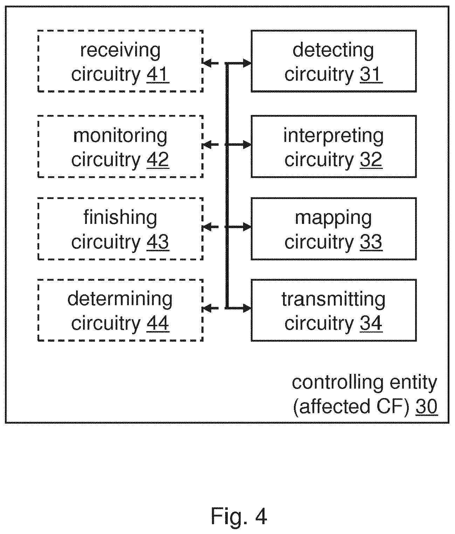

Figure 4 is a block diagram illustrating an apparatus according to exemplary embodiments of the present invention. In particular, Figure 4 illustrates a variation of the apparatus shown in Figure 3. The apparatus according to Figure 4 may thus further comprise receiving circuitry 41, monitoring circuitry 42, finishing circuitry 43, and/or determining circuitry 44.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 6, exemplary details of the detecting operation (S61) and exemplary additional operations are given, which are inherently independent from each other as such.

Such exemplary detecting operation (S61) according to exemplary embodiments of the present invention may comprise an operation of receiving a first message including a trigger for monitoring effects of said configuration action. An exemplary method according to exemplary embodiments of the present invention may further comprise an operation of monitoring effects of said configuration action upon receipt of said first message.

According to further exemplary embodiments of the present invention, said first message is indicative of a predetermined monitoring interval for said monitoring said effects of said configuration action.

According to a variation of the procedure shown in Figure 6, exemplary additional operations are given, which are inherently independent from each other as such. According to such variation, an exemplary method according to exemplary embodiments of the present invention may comprise an operation of receiving a second message including a request for transmission of said quality indicators, wherein a point in time of said receiving is indicative of an expiration of a predetermined monitoring interval for said monitoring said effects of said configuration action.

According to a variation of the procedure shown in Figure 6, exemplary additional operations are given, which are inherently independent from each other as such. According to such variation, an exemplary method according to exemplary embodiments of the present invention may comprise an operation of finishing, if said predetermined monitoring interval is expired, said monitoring said effects of said configuration action, and an operation of determining a result of said monitoring said effects of said configuration action as said perceived effects of said configuration action.

According to still further exemplary embodiments of the present invention, said method is applied in a multi-vendor environment in which each of said plurality of control entities belongs to a respective vendor in said multi-vendor environment.

According to still further exemplary embodiments of the present invention, said perceived effects of said configuration action are expressed by at least one key performance indicator value.

According to still further exemplary embodiments of the present invention, said predetermined quality indicator range is a predetermined linear scale.

According to still further exemplary embodiments of the present invention, said transmitting and/or receiving is effected via an X2 interface, an Xn interface, a cell internal cognitive network management information bus, or access through a centralized entity.

Exemplary embodiments of the present invention and in particular implementation details are defined in more specific terms below.

As mentioned above, the active/initiating CF (CF A in the example case) receives the AQI from the affected peers/CFs and is able to compute the aggregate quality of its actions. Here, according to exemplary embodiments of the present invention, a distributed implementation is provided, where variations in the way the AQI request is implemented are discussed below.

In particular, according to exemplary embodiments of the present invention, implementations with implicit AQI requests or explicit AQI requests are respectively provided.

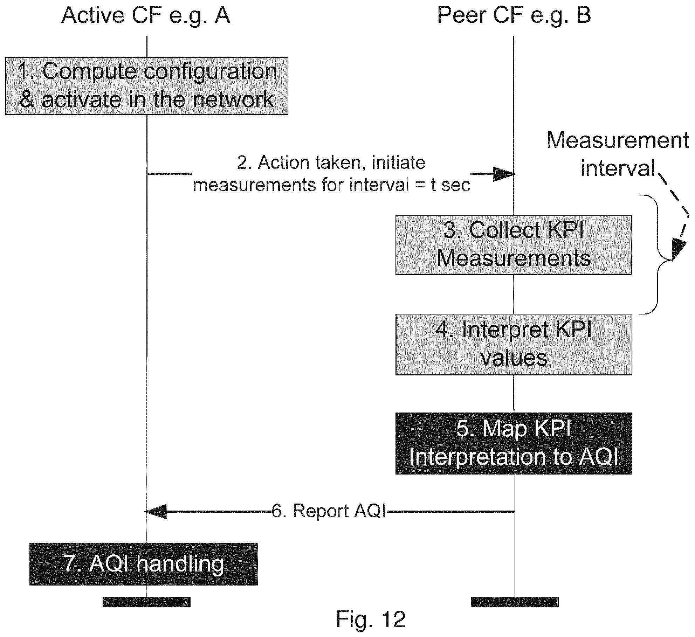

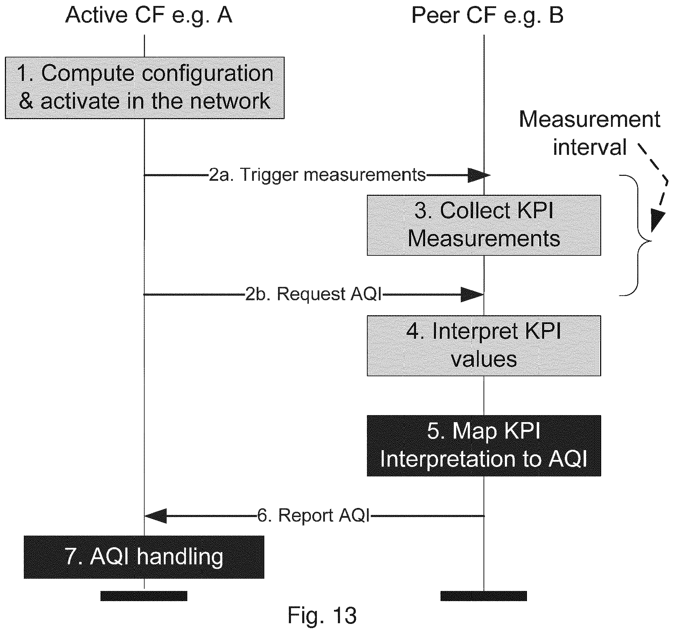

As represented by Figure 11, after CF A takes an action, it informs all candidate peers (e.g. CF B). CF A requires to receive the AQIs from all affected peers whereof two variations are possible as explained under reference to Figures 12 and 13, respectively showing a measurement trigger and AQI response message exchange options according to these two options.

Figure 12 shows a schematic diagram of processing and signaling sequences according to exemplary embodiments of the present invention.

Figure 13 shows a schematic diagram of processing and signaling sequences according to exemplary embodiments of the present invention,

The two implementations shown in Figure 12 and 13 differ in the way that the measurement period and subsequently the AQI request are communicated.

According to the exemplary embodiment illustrated in Figure 12, the measurement trigger and the AQI request may be sent in a single message which requests the peers to trigger KPI measurements and report the AQI after a specific time period. In other words, according to this implicit AQI request approach, the active CF (A) informs the peers to trigger measurements and includes a time interval at the end of which responses are expected.

According to the alternative exemplary embodiment illustrated in Figure 13, the measurement trigger is initially sent and the AQI request is separately sent after the expected measurement interval lapses. In other words, according to this explicit AQI request approach, the active CF (A) triggers measurements in the peers and, later (at the end of the measurement interval), specifically requests for AQIs from the peers. This has the advantage that the measurement trigger can be uniform for all peer CFs (and so concurrently broadcast to all) while AQI requests may be sent at different times depending on CFs and their respective impact times (the period between taking an action and conclusively seeing its deducible effects on the specific CF's metrics).

Here, it is noted that in the case of the uniform interval implicated by the approach shown in Figure 12, owing to different impact times, each peer may need to reinterpret its KPI values for the specific interval dictated by CF A. As an example, if MRO requests for an AQI from MLB, with the MLB KPI interval typically in 10s of seconds while MRO interval is 10-100s of minutes, the MLB CF would need to aggregate its KPI values over the entire MRO interval, otherwise the reported AQI would be misleading.

According to exemplary embodiments of the present invention, messages and interfaces in relation to the above explained distributed approach of the invention may be implemented as follows.

For Intra-cell integration, i.e. where MV CF coordination is possible among CFs coming from different vendors even within a single cell, the peers would be the CFs in the same cell as well as those in neighbor cell CFs. Otherwise, for Inter-cell integration where MV coordination is only possible between different cells, the peers would be the cells that are neighbors to the one with the active CF. Correspondingly, according to exemplary embodiments of the present invention, Inter-cell integration is effected across the inter-cell link (e.g. X2 for LTE, Xn for 5G), while Intra-cell integration is effected across both the inter-cell link (X2, Xn) for neighbor cell peer CFs and a cell-internal CNM information bus (in the active CF's cell) for the intra-cell peer CFs. As a further alternative, the exchange may be achieved using explicit messaging/interfacing via a centralized entity that is visible/accessible to all CFs.

According to exemplary embodiments of the present invention, the respective messages are implemented in line with the table below.

| Message | When message is sent | Fields |
|---|---|---|
| measurement trigger | Right after the action | initiating CF and cell; KPI measurement interval (for option 1) |
| AQI request | At end of CF A interval | The requesting CF; Indication of request |
| AQI report | After computing the AOI | AQI; respective peer sending the AQI (optional) |

In the case shown in Figure 12 where the AQI request is contained within the measurement trigger messages, communication to the peers includes the measurement period at the end of which they are supposed to report their AQIs to CF A. Otherwise, in the case shown in Figure 13, CF A has to specifically request for the peers' response at the end of the desired time interval.

While a linear scale from -5 to +5 has been proposed above for usage for the quality indicator, an AQI scale with 7 values is preferably used according to exemplary embodiments of the present invention.

Such AQI scale which can be standardized to be implemented with only 3 bits. The respective 7 values may be interpreted in general as showed in the two-part table below, where the second part is a continuation of the first part.

| Value | -3 | -2 | -1 | 0 | ... |
|---|---|---|---|---|---|
| Meaning | must never be used | should be avoided | Bad Outcome | Neutral effect | ... |

| Value | ... | 0 | +1 | +2 | +3 |
|---|---|---|---|---|---|
| **Meaning** | ... | Neutral effect | Positive Outcome | Very Good Outcome | As good as optimal |

The validating and aggregating of quality indicators may be implemented according to exemplary embodiments of the present invention as follows.

Generally, the active CF (CF A in the present example) needs to validate and aggregate the AOIs, albeit in a vendor (and possibly CF) specific manner.

In particular, it is possible that an external event may occur concurrent to CF A's action causing a worse or better than typical outcome. Such an outcome may also be due to an abnormal interpretation from the peer CF. Hence, according to exemplary embodiments of the present invention, the CF A detects whether such an event has happened and eliminates such outlier AQIs from its learning.

Hereby is the benefit of learning since using a local database that tracks the history of the different actions, CF A can easily determine when one action suddenly gives an outcome that is atypical of its behavior. Being able to detect and validate such events, CF A will not unnecessarily discard actions that would otherwise be beneficial. On the contrary, it can easily account for actions with small deviations compared to previous observations. These may for example indicate typical differences in operating conditions, for which the CF is able to learn the actions that best account for such differences.

After the AQIs are validated as being consistent, CF A then aggregates them into a single value that describes the quality of the action.

To learn actions with the least effects on peers, the active CF A requires an appropriate objective function for aggregating the metrics from the different affected peers /CF instances.

According to exemplary embodiments of the present invention, the aggregation is effected utilizing a generic operator-policy aggregation function, which is ideally desirable.

According to alternative embodiments of the present invention, the AQIs are aggregated into a single value utilizing a weighted multi objective optimization function.

Preferably, if qi is the AQI sent to CF A for each peer i that is affected by CF A's action taken at time t, the aggregate AQI q(at) is

$$q(a_t) = \sum_{all\ i} w_i * q_i$$

Here, the weights wi reflect vendor/operator's policy of which CFs to prioritize in minimizing negative effects or maximizing positive effects. These may be set as default by each CF vendor or may be reconfigurable by the operator as desired for each CF.

Advantages achieved by exemplary embodiments of the present invention are presented below.

A major benefit of embodiments of the present invention in comparison to existing approaches is derivable from the table below. Comparing with current solutions, the AQI continues to hide the definition as may be desired by most vendors but allows the vendors to share the interpretation for any observed values. Moreover, since values have no meaning if the definitions are not known, there is no need in this case to share/exchange them. In the exemplary case of the handover rate then, it suffices when the affected cell simply indicates that the H is either too low, low, high or too high instead of just giving values like H=0.4 or H=2%. Moreover, the solution requires standardization but the vendors' representatives do not need to worry about protecting the vendor's own intellectual property contained in the algorithms when defining details about the AQI.

| System / Solution type | Key/Name e.g. HO rate | Definition ($H = \dfrac{\#HOs}{Users}$) | Value (e.g. 4%) | Interpretati on (bad, low, ..., etc.) | Implica-tion (How usable is the available information) |
|---|---|---|---|---|---|
| OSII | Known | Known | Available | Unknown | "D" |
| Distributed Coordination | Known | Unknown | Available | Unknown | "E" |
| Standardization | Specified | Specified | Available | Only implicit | "F" |

(continued)

| System / Solution type | Key/Name e.g. HO rate | Definition ($H = \dfrac{\#HOs}{Users}$) | Value (e.g. 4%) | Interpretati on (bad, low, ..., etc.) | Implica-tion (How usable is the available information) |
|---|---|---|---|---|---|
| AQI | Known | Unknown | May be Available | Available | "G" |

"D": Interpretation can be manually developed and computed for and by each vendor.
"E": Interpretation cannot be accounted for otherwise it requires synchronization among vendors.
"F": Requires too much time to specify KPI.
"G": Only the AQI range needs to be specified, AQI is then usable by all vendors to decide actions.

As an additional advantage, it is noted that although a grading system as implied by the AQI may initially assume a specific state-of-the-art, the grades remain usable even as the state-of-the-art improves over time (and thus the same grade refers to something better over time).

The above-described procedures and functions may be implemented by respective functional elements, processors, or the like, as described below.

In the foregoing exemplary description of the network entity, only the units that are relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

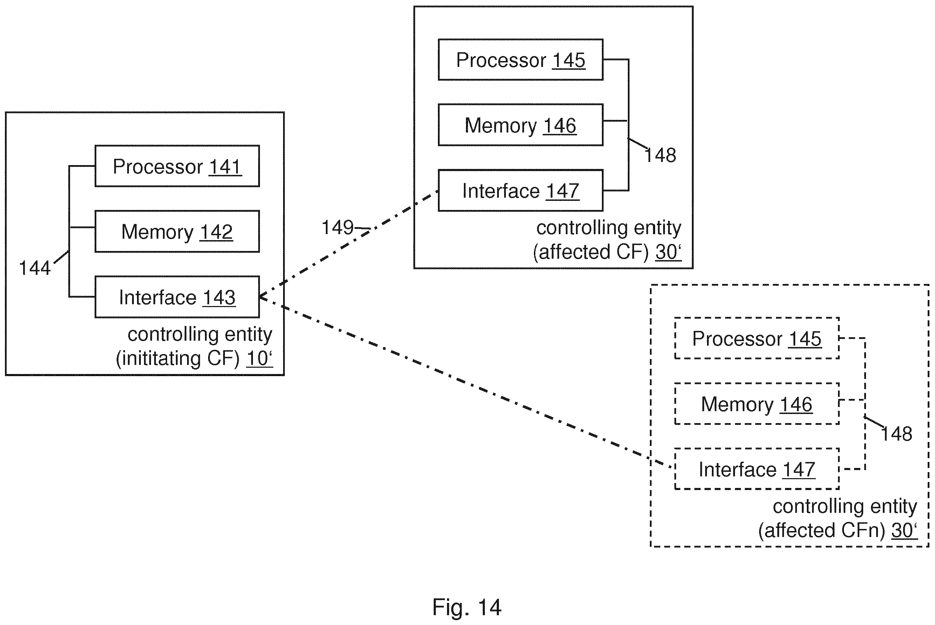

In Figure 14, an alternative illustration of apparatuses according to exemplary embodiments of the present invention is depicted. As indicated in Figure 14, according to exemplary embodiments of the present invention, the control entity 10' (corresponding to the control entity 10) comprises a processor 141, a memory 142 and an interface 143, which are connected by a bus 144 or the like. Further, according to exemplary embodiments of the present invention, the control entity 30' (corresponding to the control entity 30) comprises a processor 145, a memory 146 and an interface 147, which are connected by a bus 148 or the like, and the apparatuses (including a plurality of the control entities 30 being affected CFs) may be connected via link 149, respectively.

The processor 141/145 and/or the interface 143/147 may also include a modem or the like to facilitate communication over a (hardwire or wireless) link, respectively. The interface 143/147 may include a suitable transceiver coupled to one or more antennas or communication means for (hardwire or wireless) communications with the linked or connected device(s), respectively. The interface 143/147 is generally configured to communicate with at least one other apparatus, i.e. the interface thereof.

The memory 142/146 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the control entity 10 (corresponding to an initiating CF and configured to coordinate network optimization of a plurality of control entities in a network) comprises at least one processor 141, at least one memory 142 including computer program code, and at least one interface 143 configured for communication with at least another apparatus. The processor (i.e. the at least one processor 141, with the at least one memory 142 and the computer program code) is configured to perform initiating a configuration action, wherein said configuration action comprises a change of at least one network related configuration parameter (thus the apparatus comprising corresponding means for initiating), to perform receiving, from at least one of said plurality of control entities, a respective quality indicator, wherein each of said received quality indicators is indicative of an interpretation of effects of said configuration action on said respective one of said at least one of said plurality of control entities mapped into a predetermined quality indicator range (thus the apparatus comprising corresponding means for receiving), and to perform evaluating said configuration action based on each of said received quality indicators (thus the apparatus comprising corresponding means for evaluating).

According to further exemplary embodiments of the present invention, an apparatus representing the control entity 30 (corresponding to an affected CF and configured to coordinate network optimization of a plurality of control entities in a network) comprises at least one processor 145, at least one memory 146 including computer program code, and at least one interface 147 configured for communication with at least another apparatus. The processor (i.e. the at least one processor 145, with the at least one memory 146 and the computer program code) is configured to perform detecting a configuration action initiated by a control entity of said plurality of control entities, wherein said configuration action comprises a change of at least one network related configuration parameter (thus the apparatus comprising corresponding means for detecting), to perform interpreting perceived effects of said configuration action (thus the apparatus comprising corresponding means for interpreting), to perform mapping a result of said interpreting into a predetermined quality indicator range as a quality indicator (thus the apparatus comprising corresponding means for mapping), and to perform transmitting said quality indicator to said control entity (thus the apparatus comprising corresponding means for transmitting).

For further details regarding the operability/functionality of the individual apparatuses, reference is made to the above description in connection with any one of Figures 1 to 13, respectively.

For the purpose of the present invention as described herein above, it should be noted that

- method steps likely to be implemented as software code portions and being run using a processor at a network server or network entity (as examples of devices, apparatuses and/or modules thereof, or as examples of entities including apparatuses and/or modules therefore), are software code independent and can be specified using *any programming* language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using *any hardware* technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing *thereof.*

*In* view of the above, there are provided measures for coordinated network optimization by cognitive network management. Such measures exemplarily comprise initiating a configuration action, wherein said configuration action comprises a change of at least one network related configuration parameter, receiving, from at least one of said plurality of control entities, a respective quality indicator, wherein each of said received quality indicators is indicative of an interpretation of effects of said configuration action on said respective one of said at least one of said plurality of control entities mapped into a predetermined quality indicator range, and evaluating said configuration action based on each of said received quality indicators.

Even though the invention is described above with reference to the examples according to the accompanying drawings, it is to be understood that the invention is not restricted *thereto.*

*List* of acronyms and abbreviations

| | |
|---|---|
| 3GPP | 3rd Generation Partnership Project |
| AQI | CFAQI, CF action quality indicator |
| CF | cognitive function |
| CNM | cognitive network management |
| DevOps | development and information technology operations |
| HO | handover |
| KPI | key performance indicator |
| MLB | mobility load balancing |
| MNO | mobile network operator |
| MRO | mobility robustness optimization |
| MV | multi-vendor |
| NM | network management |
| OAM | operations, administration and management |
| OSSII | Operations Support Systems interoperability initiative |
| R&D | research and development |
| RLF | radio link failure |
| SON | self-organizing networks |

**Claims**

1. A method to coordinate network optimization of a plurality of control entities in a network by cognitive network management, wherein said plurality of control entities comprises an initiation cognitive function (10) and at least one affected cognitive function (30), said method comprising

   initiating (S51), by said initiation cognitive function, a configuration action, wherein said configuration action comprises a change of at least one network related configuration parameter, wherein said initiating includes computing said change and activating said change in said network,
   transmitting, by said initiation cognitive function, a first message including a trigger for monitoring effects of said configuration action on said respective one of said at least one affected cognitive function by measuring key performance indicators to said at least one of said at least one affected cognitive function,
   receiving (S52), by said initiation cognitive function, from at least one of said at least one affected cognitive function, a respective cognitive function action quality indicator, wherein each of said received cognitive function action quality indicators is indicative of a quantification of said respective key performance indicators mapped into a standardized fixed action quality indicator range, and
   evaluating (S53), by said initiation cognitive function, said configuration action based on each of said received cognitive function action quality indicators, by handling said received cognitive function action quality indicators for consideration in an own learning process, the handling including

validating, by said initiation cognitive function (10), each of said received cognitive function action quality indicators, and

aggregating, by said initiation cognitive function, said validated cognitive function action quality indicators.

2.  The method according to claim 1, further comprising
    transmitting, by said initiation cognitive function (10), after expiration of a predetermined monitoring interval from transmitting said first message, to said at least one of said at least one affected cognitive function (30), a second message including a request for transmission of said cognitive function action quality indicators.

3.  The method according to claim 1, wherein

    in relation to said aggregating, said method further comprises
    multiplying each of said validated cognitive function action quality indicators with a weight associated with said respective one of said at least one of said at least one affected cognitive function (30), and
    calculating a sum of each of said weighted received cognitive function action quality indicators.

4.  A method to coordinate network optimization of a plurality of control entities in a network by cognitive network management, wherein said plurality of control entities comprises an initiation cognitive function (10) and at least one affected cognitive function (30), said method comprising

    detecting (S61), by a first affected cognitive function (30) of said at least one affected cognitive function, a configuration action initiated by said initiation cognitive function, wherein said configuration action comprises a change of at least one network related configuration parameter and activation of said change in said network,
    quantifying (S62), by said first affected cognitive function, effects of said configuration action on said first affected cognitive function as measured key performance indicators,
    mapping (S63), by said first affected cognitive function, a result of said quantifying into a standardized fixed action quality indicator range as a cognitive function action quality indicator, and
    transmitting (S64), by said first affected cognitive function, said cognitive function action quality indicator to said initiation cognitive function, wherein
    said detecting comprises:

        receiving a first message including a trigger for measuring said key performance indicators, and
        measuring said key performance indicators upon receipt of said first message.

5.  The method according to any of claims 1 to 4, wherein

    said method is applied in a multi-vendor environment in which each of said plurality of control entities belongs to a respective vendor in said multi-vendor environment, or
    said measured key performance indicators are expressed by at least one key performance indicator value.

6.  The method according to any of claims 1 to 5, wherein

    said standardized action quality indicator range is a predetermined linear scale, or
    said transmitting and/or receiving is effected via an X2 interface, an Xn interface, a cell internal cognitive network management information bus, or access through a centralized entity.

7.  An apparatus being an initiation cognitive function (10), the apparatus being configured to coordinate network optimization of a plurality of control entities in a network by cognitive network management, wherein said plurality of control entities comprises said initiation cognitive function and at least one affected cognitive function (30), said apparatus comprising:

    means for initiating (11) a configuration action, wherein said configuration action comprises a change of at least one network related configuration parameter, wherein said initiating includes computing said change and activating said change in said network,
    means for transmitting (22) a first message including a trigger for monitoring effects of said configuration action on said respective one of said at least one affected cognitive function by measuring key performance indicators to said at least one of said at least one affected cognitive function,
    means for receiving (12), from at least one of said at least one affected cognitive function, a respective cognitive function action quality indicator, wherein each of said received cognitive function action quality indicators is indicative of a quantification of said respective key performance indicators mapped into a standardized fixed action quality indicator range, and

means for evaluating (13) said configuration action based on each of said received cognitive function action quality indicators by handling said received cognitive function action quality indicators for consideration in an own learning process, the handling including

validating each of said received cognitive function action quality indicators, and
aggregating said validated cognitive function action quality indicators.

8. The apparatus according to claim 7 comprising:
means for determining (21) said configuration action based on a network requirement.

9. An apparatus being a first affected cognitive function (30), the apparatus being configured to coordinate network optimization of a plurality of control entities in a network by cognitive network management, wherein said plurality of control entities comprises an initiation cognitive function (10) and at least one affected cognitive function including said first affected cognitive function, said apparatus comprising:

means for detecting (31) a configuration action initiated by said initiation cognitive function, wherein said configuration action comprises a change of at least one network related configuration parameter and activation of said change in said network,
means for quantifying (32) effects of said configuration action on said first affected cognitive function as measured key performance indicators,
means for mapping (33) a result of said quantifying into a standardized fixed action quality indicator range as a cognitive function action quality indicator, and
means for transmitting (34) said cognitive function action quality indicator to said initiation cognitive function, wherein
the apparatus comprises:

means for receiving (41) a first message including a trigger for measuring said key performance indicators, and
means for measuring said key performance indicators upon receipt of said first message.

10. The apparatus according to claim 9, wherein
said first message is indicative of a predetermined monitoring interval for said measuring said key performance indicators.

11. The apparatus according to claim 9 comprising:
means for receiving (41) a second message including a request for transmission of said cognitive function action quality indicators, wherein a point in time of said receiving is indicative of an expiration of a predetermined monitoring interval for said measuring said key performance indicators.

12. The apparatus according to claim 10 or 11 comprising:

means for finishing (43), if said predetermined monitoring interval is expired, said measuring said key performance indicators, and
means for determining (44) a result of said measuring said key performance indicators.

13. A computer program product comprising computer-executable computer program code which, when the program is run on a computer, is configured to cause the computer to carry out the method according to any one of claims 1 to 3 or 4 to 6.


**Patentansprüche**

1. Verfahren zum Koordinieren einer Netzwerkoptimierung einer Vielzahl von Steuerentitäten in einem Netzwerk durch kognitive Netzwerkverwaltung, wobei die Vielzahl von Steuerentitäten eine kognitive Initiierungsfunktion (10) und mindestens eine beeinträchtigte kognitive Funktion (30) umfassen, wobei das Verfahren Folgendes umfasst

Initiieren (S51) eines Auslegungsvorgangs durch die kognitive Initiierungsfunktion, wobei der Auslegungsvorgang eine Änderung von mindestens einem netzwerkbezogenen Auslegungsparameter umfasst, wobei das Initiieren das Errechnen der Änderung und das Aktivieren der Änderung im Netzwerk beinhaltet,

Übertragen einer ersten Nachricht, die einen Auslöser zum Überwachen von Effekten des Auslegungsvorgangs auf die jeweilige eine der mindestens einen beeinträchtigten kognitiven Funktion durch Messen von Schlüsselleistungsindikatoren beinhaltet, durch die kognitive Initiierungsfunktion zu der mindestens einen der mindestens einen beeinträchtigten kognitiven Funktion,

Empfangen (S52) eines jeweiligen Vorgangsqualitätsindikators für kognitive Funktionen durch die kognitive Initiierungsfunktion von mindestens einer der mindestens einen beeinträchtigten kognitiven Funktion, wobei jeder der empfangenen Vorgangsqualitätsindikatoren für kognitive Funktionen eine Quantifizierung der jeweiligen Schlüsselleistungsindikatoren anzeigt, die einem standardisierten festen Vorgangsqualitätsindikatorbereich zugeordnet sind, und

Beurteilen (S53) des Auslegungsvorgangs durch die kognitive Initiierungsfunktion auf Basis von jedem der empfangenen Vorgangsqualitätsindikatoren für kognitive Funktionen durch Handhaben der empfangenen Vorgangsqualitätsindikatoren für kognitive Funktionen zur Berücksichtigung in einem eigenen Lernprozess, wobei das Handhaben Folgendes beinhaltet

Validieren von jedem der empfangenen Vorgangsqualitätsindikatoren für kognitive Funktionen durch die kognitive Initiierungsfunktion (10) und

Aggregieren der validierten Vorgangsqualitätsindikatoren für kognitive Funktionen durch die kognitive Initiierungsfunktion.

2. Verfahren nach Anspruch 1, das ferner Folgendes umfasst

Übertragen einer zweiten Nachricht, die eine Anforderung zur Übertragung der Vorgangsqualitätsindikatoren für kognitive Funktionen beinhaltet, nach Ablauf eines vorbestimmten Überwachungsintervalls vom Übertragen der ersten Nachricht durch die kognitive Initiierungsfunktion (10) zu der mindestens einen der mindestens einen beeinträchtigten kognitiven Funktion (30).

3. Verfahren nach Anspruch 1, wobei

das Verfahren mit Bezug auf das Aggregieren ferner Folgendes umfasst

Multiplizieren von jedem der validierten Vorgangsqualitätsindikatoren für kognitive Funktionen mit einer Gewichtung, die mit der jeweiligen einen der mindestens einen der mindestens einen beeinträchtigten kognitiven Funktion (30) verknüpft ist, und

Berechnen einer Summe von jedem der gewichteten empfangenen Vorgangsqualitätsindikatoren für kognitive Funktionen.

4. Verfahren zum Koordinieren einer Netzwerkoptimierung einer Vielzahl von Steuerentitäten in einem Netzwerk durch kognitive Netzwerkverwaltung, wobei die Vielzahl von Steuerentitäten eine kognitive Initiierungsfunktion (10) und mindestens eine beeinträchtigte kognitive Funktion (30) umfassen, wobei das Verfahren Folgendes umfasst

Detektieren (S61) eines von der kognitiven Initiierungsfunktion initiierten Auslegungsvorgangs durch eine erste beeinträchtigte kognitive Funktion (30) der mindestens einen beeinträchtigten kognitiven Funktion, wobei der Auslegungsvorgang eine Änderung von mindestens einem netzwerkbezogenen Auslegungsparameter und eine Aktivierung der Änderung im Netzwerk umfasst,

Quantifizieren (S62) von Effekten des Auslegungsvorgangs auf die erste beeinträchtigte kognitive Funktion als gemessene Schlüsselleistungsindikatoren durch die erste beeinträchtigte kognitive Funktion,

Zuordnen (S63) eines Ergebnisses des Quantifizierens zu einem standardisierten festen Vorgangsqualitätsindikatorbereich als einen Vorgangsqualitätsindikator für kognitive Funktionen durch die erste beeinträchtigte kognitive Funktion und

Übertragen (S64) des Vorgangsqualitätsindikators für kognitive Funktionen durch die erste beeinträchtigte kognitive Funktion zur kognitiven Initiierungsfunktion, wobei

das Detektieren Folgendes umfasst:

Empfangen einer ersten Nachricht, die einen Auslöser zum Messen der Schlüsselleistungsindikatoren beinhaltet, und

Messen der Schlüsselleistungsindikatoren nach Empfang der ersten Nachricht.

5. Verfahren nach einem der Ansprüche 1 bis 4, wobei

das Verfahren in einer herstellerunabhängigen Umgebung angewendet wird, in der jede der Vielzahl von Steuerentitäten zu einem jeweiligen Hersteller in der herstellerunabhängigen Umgebung gehört, oder
die gemessenen Schlüsselleistungsindikatoren durch mindestens einen Schlüsselleistungsindikatorwert ausgedrückt werden.

6. Verfahren nach einem der Ansprüche 1 bis 5, wobei

der standardisierte Vorgangsqualitätsindikatorbereich eine vorbestimmte Linearskala ist oder
das Übertragen und/oder Empfangen via eine X2-Schnittstelle, eine Xn-Schnittstelle, einen zellinternen kognitiven Netzwerkverwaltungsinformationsbus oder Zugriff über eine zentralisierte Entität erfolgt.

7. Vorrichtung, bei der es sich um eine kognitive Initiierungsfunktion (10) handelt, wobei die Vorrichtung zum Koordinieren einer Netzwerkoptimierung einer Vielzahl von Steuerentitäten in einem Netzwerk durch kognitive Netzwerkverwaltung ausgelegt ist, wobei die Vielzahl von Steuerentitäten die kognitive Initiierungsfunktion und mindestens eine beeinträchtigte kognitive Funktion (30) umfassen, wobei die Vorrichtung Folgendes umfasst:

Mittel zum Initiieren (11) eines Auslegungsvorgangs, wobei der Auslegungsvorgang eine Änderung von mindestens einem netzwerkbezogenen Auslegungsparameter umfasst, wobei das Initiieren das Errechnen der Änderung und das Aktivieren der Änderung im Netzwerk beinhaltet,
Mittel zum Übertragen (22) einer ersten Nachricht, die einen Auslöser zum Überwachen von Effekten des Auslegungsvorgangs auf die jeweilige eine der mindestens einen beeinträchtigten kognitiven Funktion durch Messen von Schlüsselleistungsindikatoren beinhaltet, zu der mindestens einen der mindestens einen beeinträchtigten kognitiven Funktion,
Mittel zum Empfangen (12) eines jeweiligen Vorgangsqualitätsindikators für kognitive Funktionen von mindestens einer der mindestens einen beeinträchtigten kognitiven Funktion, wobei jeder der empfangenen Vorgangsqualitätsindikatoren für kognitive Funktionen eine Quantifizierung der jeweiligen Schlüsselleistungsindikatoren anzeigt, die einem standardisierten festen Vorgangsqualitätsindikatorbereich zugeordnet sind, und
Mittel zum Beurteilen (13) des Auslegungsvorgangs auf Basis von jedem der empfangenen Vorgangsqualitätsindikatoren für kognitive Funktionen durch Handhaben der empfangenen Vorgangsqualitätsindikatoren für kognitive Funktionen zur Berücksichtigung in einem eigenen Lernprozess, wobei das Handhaben Folgendes beinhaltet
Validieren von jedem der empfangenen Vorgangsqualitätsindikatoren für kognitive Funktionen und
Aggregieren der validierten Vorgangsqualitätsindikatoren für kognitive Funktionen.

8. Vorrichtung nach Anspruch 7, die Folgendes umfasst:
Mittel zum Bestimmen (21) des Auslegungsvorgangs auf Basis einer Netzwerkanforderung.

9. Vorrichtung, bei der es sich um eine erste beeinträchtigte Funktion (30) handelt, wobei die Vorrichtung zum Koordinieren einer Netzwerkoptimierung einer Vielzahl von Steuerentitäten in einem Netzwerk durch kognitive Netzwerkverwaltung ausgelegt ist, wobei die Vielzahl von Steuerentitäten eine kognitive Initiierungsfunktion (10) und mindestens eine beeinträchtigte kognitive Funktion umfassen, die die erste beeinträchtigte kognitive Funktion beinhaltet, wobei die Vorrichtung Folgendes umfasst:

Mittel zum Detektieren (31) eines von der kognitiven Initiierungsfunktion initiierten Auslegungsvorgangs, wobei der Auslegungsvorgang eine Änderung von mindestens einem netzwerkbezogenen Auslegungsparameter und eine Aktivierung der Änderung im Netzwerk umfasst,
Mittel zum Quantifizieren (32) von Effekten des Auslegungsvorgangs auf die erste beeinträchtigte kognitive Funktion als gemessene Schlüsselleistungsindikatoren,
Mittel zum Zuordnen (33) eines Ergebnisses des Quantifizierens zu einem standardisierten festen Vorgangsqualitätsindikatorbereich als einen Vorgangsqualitätsindikator für kognitive Funktionen und
Mittel zum Übertragen (34) des Vorgangsqualitätsindikators für kognitive Funktionen zur kognitiven Initiierungsfunktion, wobei
die Vorrichtung Folgendes umfasst:

Mittel zum Empfangen (41) einer ersten Nachricht, die einen Auslöser zum Messen der Schlüsselleistungsindikatoren beinhaltet, und
Mittel zum Messen der Schlüsselleistungsindikatoren nach Empfang der ersten Nachricht.

**10.** Vorrichtung nach Anspruch 9, wobei
die erste Nachricht ein vorbestimmtes Überwachungsintervall zum Messen der Schlüsselleistungsindikatoren anzeigt.

**11.** Vorrichtung nach Anspruch 9, die Folgendes umfasst:
Mittel zum Empfangen (41) einer zweiten Nachricht, die eine Anforderung einer Übertragung der Vorgangsqualitätsindikatoren für kognitive Funktionen beinhaltet, wobei ein Zeitpunkt des Empfangens einen Ablauf eines vorbestimmten Überwachungsintervalls für das Messen der Schlüsselleistungsindikatoren anzeigt.

**12.** Vorrichtung nach Anspruch 10 oder 11, die Folgendes umfasst:

Mittel zum Beenden (43) des Messens der Schlüsselleistungsindikatoren, wenn das vorbestimmte Überwachungsintervall abgelaufen ist, und
Mittel zum Bestimmen (44) eines Ergebnisses des Messens der Schlüsselleistungsindikatoren.

**13.** Computerprogrammprodukt, das einen computerausführbaren Computerprogrammcode umfasst, der, wenn das Programm auf einem Computer läuft, dazu ausgelegt ist, den Computer zu veranlassen, das Verfahren nach einem der Ansprüche 1 bis 3 oder 4 bis 6 umzusetzen.

**Revendications**

**1.** Procédé de coordination de l'optimisation de réseau d'une pluralité d'entités de commande dans un réseau par gestion de réseau cognitif, dans lequel ladite pluralité d'entités de commande comprend une fonction cognitive d'initiation (10) et au moins une fonction cognitive affectée (30), ledit procédé comprenant

l'initiation (S51), par ladite fonction cognitive d'initiation, d'une action de configuration, dans lequel ladite action de configuration comprend la modification d'au moins un paramètre de configuration lié au réseau, dans lequel ladite initiation comporte le calcul de ladite modification et l'activation de ladite modification dans ledit réseau,
la transmission à ladite au moins une fonction cognitive affectée par ladite fonction cognitive d'initiation, d'un premier message comportant un déclencheur pour surveiller les effets de ladite action de configuration sur ladite fonction cognitive affectée respective de ladite ou desdites fonctions cognitives affectées, en mesurant des indicateurs clés de performance,
la réception (S52), par ladite fonction cognitive d'initiation, en provenance d'au moins une fonction cognitive affectée, d'un indicateur de qualité d'action de fonction cognitive respectif, dans lequel chacun desdits indicateurs de qualité d'action de fonction cognitive reçus est indicatif d'une quantification desdits indicateurs clés de performance respectifs mappés dans une plage d'indicateurs de qualité d'action fixe normalisée, et
l'évaluation (S53), par ladite fonction cognitive d'initiation, de ladite action de configuration sur la base de chacun desdits indicateurs de qualité d'action de fonction cognitive reçus, en traitant lesdits indicateurs de qualité d'action de fonction cognitive reçus en vue de leur prise en compte dans un processus d'apprentissage propre, le traitement comportant
la validation, par ladite fonction cognitive d'initiation (10), de chacun desdits indicateurs de qualité d'action de fonction cognitive reçus, et
l'agrégation, par ladite fonction cognitive d'initiation, desdits indicateurs de qualité d'action de fonction cognitive validés.

**2.** Procédé selon la revendication 1, comprenant en outre
la transmission à ladite au moins une fonction cognitive affectée (30), par ladite fonction cognitive d'initiation (10), après l'expiration d'un intervalle de surveillance prédéterminé à partir de la transmission dudit premier message, d'un deuxième message comportant une demande de transmission desdits indicateurs de qualité d'action de fonction cognitive.

**3.** Procédé selon la revendication 1, dans lequel

en ce qui concerne ladite agrégation, ledit procédé comprend en outre
la multiplication de chacun desdits indicateurs de qualité d'action de fonction cognitive validés par un poids associé à ladite fonction cognitive affectée respective de ladite ou desdites fonctions cognitives affectées (30), et
le calcul d'une somme de chacun desdits indicateurs de qualité d'action de fonction cognitive reçus pondérés.

**4.** Procédé de coordination de l'optimisation de réseau d'une pluralité d'entités de commande dans un réseau par gestion de réseau cognitif, dans lequel ladite pluralité d'entités de commande comprend une fonction cognitive d'initiation (10) et au moins une fonction cognitive affectée (30), ledit procédé comprenant

la détection (S61), par une première fonction cognitive affectée (30) de ladite ou desdites fonctions cognitives affectées, d'une action de configuration initiée par ladite fonction cognitive d'initiation, dans lequel ladite action de configuration comprend la modification d'au moins un paramètre de configuration lié au réseau, et l'activation de ladite modification dans ledit réseau,

la quantification (S62), par ladite première fonction cognitive affectée, des effets de ladite action de configuration sur ladite première fonction cognitive affectée en tant qu'indicateurs clés de performance mesurés,

le mappage (S63), par ladite première fonction cognitive affectée, d'un résultat de ladite quantification dans une plage d'indicateurs de qualité d'action fixe normalisée en tant qu'indicateur de qualité d'action de fonction cognitive, et

la transmission (S64), par ladite première fonction cognitive affectée, dudit indicateur de qualité d'action de fonction cognitive à ladite fonction cognitive d'initiation, dans lequel

ladite détection comprend :

la réception d'un premier message comportant un déclencheur pour mesurer lesdits indicateurs clés de performance, et

la mesure desdits indicateurs clés de performance à la réception dudit premier message.

**5.** Procédé selon l'une des revendications 1 à 4, dans lequel

ledit procédé est appliqué dans un environnement dans lequel chacune de ladite pluralité d'entités de commande appartient à un fournisseur respectif dans ledit environnement multifournisseur, ou

lesdits indicateurs clés de performance mesurés sont exprimés par au moins une valeur d'indicateur de performance clé.

**6.** Procédé selon l'une des revendications 1 à 5, dans lequel

ladite plage d'indicateurs de qualité d'action normalisée est une échelle linéaire prédéterminée, ou

ladite transmission et/ou réception s'effectue via une interface X2, une interface Xn, un bus d'informations de gestion de réseau cognitif interne à la cellule, ou l'accès par une entité centralisée.

**7.** Appareil constituant une fonction cognitive d'initiation (10), l'appareil étant configuré pour coordonner l'optimisation de réseau d'une pluralité d'entités de commande dans un réseau par gestion de réseau cognitif, dans lequel ladite pluralité d'entités de commande comprend ladite fonction cognitive d'initiation et au moins une fonction cognitive affectée (30), ledit appareil comprenant :

des moyens pour initier (11) une action de configuration, dans lequel ladite action de configuration comprend la modification d'au moins un paramètre de configuration lié au réseau, dans lequel ladite initiation comporte le calcul de ladite modification et l'activation de ladite modification dans ledit réseau,

des moyens pour transmettre (22) à ladite au moins une fonction cognitive affectée, un premier message comportant un déclencheur pour surveiller les effets de ladite action de configuration sur ladite fonction cognitive affectée respective de ladite ou desdites fonctions cognitives affectées, en mesurant des indicateurs clés de performance,

des moyens pour recevoir (12), en provenance d'au moins une fonction cognitive affectée, un indicateur de qualité d'action de fonction cognitive respectif, dans lequel chacun desdits indicateurs de qualité d'action de fonction cognitive reçus est indicatif d'une quantification desdits indicateurs clés de performance respectifs mappés dans une plage d'indicateurs de qualité d'action fixe normalisée, et

des moyens pour évaluer (13) ladite action de configuration sur la base de chacun desdits indicateurs de qualité d'action de fonction cognitive reçus en traitant lesdits indicateurs de qualité d'action de fonction cognitive reçus en vue de leur prise en compte dans un processus d'apprentissage propre, le traitement comportant

la validation de chacun desdits indicateurs de qualité d'action de fonction cognitive reçus, et

l'agrégation desdits indicateurs de qualité d'action de fonction cognitive validés.

**8.** Appareil selon la revendication 7 comprenant :
des moyens pour déterminer (21) ladite action de configuration sur la base d'une exigence de réseau.

9. Appareil constituant une première fonction cognitive affectée (30), l'appareil étant configuré pour coordonner l'optimisation de réseau d'une pluralité d'entités de commande dans un réseau par gestion de réseau cognitif, dans lequel ladite pluralité d'entités de commande comprend une fonction cognitive d'initiation (10) et au moins une fonction cognitive affectée comportant ladite première fonction cognitive affectée, ledit appareil comprenant :

> des moyens pour détecter (31) une action de configuration initiée par ladite fonction cognitive d'initiation, dans lequel ladite action de configuration comprend la modification d'au moins un paramètre de configuration lié au réseau et l'activation de ladite modification dans ledit réseau,
> des moyens pour quantifier (32) les effets de ladite action de configuration sur ladite première fonction cognitive affectée en tant qu'indicateurs clés de performance mesurés,
> des moyens pour mapper (33) un résultat de ladite quantification dans une plage d'indicateurs de qualité d'action fixe normalisée en tant qu'indicateur de qualité d'action de fonction cognitive, et
> des moyens pour transmettre (34) ledit indicateur de qualité d'action de fonction cognitive à ladite fonction cognitive d'initiation, dans lequel
> l'appareil comprend :

>> des moyens pour recevoir (41) un premier message comportant un déclencheur pour mesurer lesdits indicateurs clés de performance, et
>> des moyens pour mesurer lesdits indicateurs clés de performance à la réception dudit premier message.

10. Appareil selon la revendication 9, dans lequel
ledit premier message est indicatif d'un intervalle de surveillance prédéterminé pour ladite mesure desdits indicateurs clés de performance.

11. Appareil selon la revendication 9 comprenant :
des moyens pour recevoir (41) un deuxième message comportant une demande de transmission desdits indicateurs de qualité d'action de fonction cognitive, dans lequel un instant de ladite réception est indicatif de l'expiration d'un intervalle de surveillance prédéterminé pour ladite mesure desdits indicateurs clés de performance.

12. Appareil selon la revendication 10 ou 11 comprenant :

> des moyens pour terminer (43), si ledit intervalle de surveillance prédéterminé est expiré, ladite mesure desdits indicateurs clés de performance, et
> des moyens pour déterminer (44) un résultat de ladite mesure desdits indicateurs clés de performance.

13. Produit de programme informatique comprenant un code de programme informatique exécutable par ordinateur qui, lorsque le programme est exécuté sur un ordinateur, est configuré pour amener l'ordinateur à mettre en œuvre le procédé selon l'une des revendications 1 à 3 ou 4 à 6.

Fig. 1

Fig. 2

Fig. 3

| receiving circuitry 41 | detecting circuitry 31 |
| monitoring circuitry 42 | interpreting circuitry 32 |
| finishing circuitry 43 | mapping circuitry 33 |
| determining circuitry 44 | transmitting circuitry 34 |

controlling entity (affected CF) 30

Fig. 4

initiating a configuration action, wherein said configuration action comprises a change of at least one network related configuration parameter

S51

receiving, from at least one of said plurality of control entities, a respective quality indicator, wherein each of said received quality indicators is indicative of an interpretation of effects of said configuration action on said respective one of said at least one of said plurality of control entities mapped into a predetermined quality indicator range

S52

evaluating said configuration action based on each of said received quality indicators

S53

Fig. 5

detecting a configuration action initiated by a control entity of said plurality of control entities, wherein said configuration action comprises a change of at least one network related configuration parameter

S61

interpreting perceived effects of said configuration action

S62

mapping a result of said interpreting into a predetermined quality indicator range as a quality indicator

S63

transmitting said quality indicator to said control entity

S64

Fig. 6

NETWORK

Agent

1. State (KPIs)

3. Feedback= New State(KPIs)

2. Action

Fig. 7

1. State (Context, KPIs, parameters, etc)

Agent

2. Action

NETWORK

3. Feedback =Quality the action

Fig. 8

Fig. 9

1. state

3. Feedback/reward

A

2a. action

2b. trigger evaluation

Vendor Boundary

Cell/
Network

3. Feedback =

QI

B

EP 3 643 105 B1

Fig. 10

Active CF e.g. A

Peer CF e.g. B

1. Compute configuration & activate in the network

2. Trigger KPI measurements

3. Collect KPI Measurements

4. Interpret KPI values

5. Map KPI Interpretation to AQI

6. Report AQI

7. AQI handling

Fig. 11

Active CF e.g. A  Peer CF e.g. B

**1. Compute configuration & activate in the network**

Measurement interval

2. Action taken, initiate
measurements for interval = t sec

**3. Collect KPI Measurements**

**4. Interpret KPI values**

**5. Map KPI Interpretation to AQI**

6. Report AQI

**7. AQI handling**

Fig. 12

Fig. 13

EP 3 643 105 B1

Processor 141

Memory 142

144

Interface 143

controlling entity
(inititating CF) 10'

Processor 145

Memory 146

148

Interface 147

controlling entity
(affected CF) 30'

149

Processor 145

Memory 146

148

Interface 147

controlling entity
(affected CFn) 30'

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017063621 A1
- US 2016087842 A1

- WO 2016150468 A1

**Non-patent literature cited in the description**

- Verification of Configuration Management Changes in Self-Organizing Networks. **TSVETKOV TSVETKO et al.** IEEE TRANSACTIONS ON NETWORK AND SERVICE MANAGEMENT. IEEE, 01 December 2016, vol. 13, 885-898